# EUROPÄISCHE PATENTANMELDUNG

(11) **EP 4 666 838 A1**
(43) Veröffentlichungstag der Anmeldung: **24.12.2025**
(21) Anmeldenummer: 25176390.0
(22) Anmeldetag: 14.05.2025
(51) Int. Cl.: A01F 15/08, A01F 15/14

(54) **VERFAHREN ZUR QUALITÄTSBEURTEILUNG EINES DURCH EINE BALLENPRESSE GEPRESSTEN ERNTEGUTBALLENS**

(30) Priorität: 19.06.2024 DE 102024117252
(71) Anmelder: Usines CLAAS France S.A.S, 57140 St. Rémy / Woippy (FR)
(72) Erfinder: Fuchs, Volker, 54439 Saarburg (DE); Batancourt, Grégory, 57130 Vionville (FR); Bistritz, Philipp, 78224 Singen (DE); Bonhomme, Thierry, 57730 Macheren (FR); Dommange, Pierre, 57160 Scy-Chazelles (FR); Fischer, Josef, 88400 Biberach (DE); Henselmeyer, Hendrik, 49214 Bad Rothenfelde (DE); Obellianne, Steve, 57530 Courcelles-Chaussy (FR); Risse, Nicolas, 57645 Retonfey (FR); Rongvaux, Laurent, 54800 Tronville (FR); Wieckhorst, Jan Carsten, 29525 Uelzen Orsteil Hanstedt 2 (DE)
(74) Vertreter: CLAAS Gruppe

(57) **Zusammenfassung**

Die vorliegende Erfindung betrifft ein Verfahren zur Qualitätsüberwachung eines durch eine Ballenpresse (1) gepressten Erntegutballens (13), wobei die Ballenpresse (1) von einem Zugfahrzeug (11) angetrieben wird, wobei mittels zumindest einer Sensoreinrichtung (25) der gepresste Erntegutballen (13) erfasst wird, wobei durch die zumindest eine optische und/oder akustische Sensoreinrichtung (25) die Form des gepressten Erntegutballens (13) wiedergebende Daten (34) erzeugt und einer Auswertung durch eine Steuerungseinrichtung (33) unterzogen werden, um eine Anomalie in der Formgebung des gepressten Erntegutballens (13) zu detektieren..

## Beschreibung

Die vorliegende Erfindung betrifft ein Verfahren zur Qualitätsüberwachung eines durch eine Ballenpresse gepressten Erntegutballens gemäß dem Oberbegriff des Anspruches 1. Weiterhin ist ein System zur Qualitätsüberwachung eines durch eine Ballenpresse gepressten Erntegutballens gemäß dem Oberbegriff des Anspruches 12 Gegenstand der vorliegenden Erfindung.

Die Qualität und Wirtschaftlichkeit von Erntegutballen bestimmt sich nicht nur anhand der Inhaltsstoffe des zum Erntegutballen gepressten Erntegutes sowie der Dichte des Erntegutballens, sondern darüber hinaus durch die Form sowie die Formstabilität. Die Ballenform bestimmt sich dabei nach der Ausführung der Ballenpresse, wobei allgemein zwischen einer Rundballenpresse und einer Quaderballenpresse unterschieden wird. Eine ungleichmäßige Form bzw. eine von der angestrebten Form abweichende Formgebung des Erntegutballens, ob zylindrisch oder quaderförmig, ist ein Indiz dafür, dass eine Formstabilität nicht gegeben ist, zumindest aber, dass eine angestrebte Abmessung nicht erreicht wurden. Neben einer mangelnden Lagerungsdichte und Qualität der Erntegutballen kann eine ungleichmäßige Form bzw. mangelnde Formstabilität auch für die nachgelagerten Prozessschritte "Abtransport der Ballen" sowie "Lagerung der Ballen" nachteilig sein. Erntegutballen mit ungleichmäßiger Form lassen sich nur unter erschwerten Bedingungen abtransportieren und in der Regel zwecks ihrer Lagerung schlecht stapeln.

Ein Verfahren zur Qualitätsüberwachung eines durch eine Ballenpresse gepressten Erntegutballens ist aus der EP 3 811 768 A1 bekannt. Das Verfahren wird von einem System zur Bestimmung der Ballenzusammensetzung durchgeführt. Das System umfasst optische Sensoren, die dazu eingerichtet sind, dass sie elektromagnetische Reflexionsinformationen des Erntematerials erhalten, während dieses durch die Ballenpresse bearbeitet wird. Hierdurch wird auf Inhaltsstoffe des Erntegutballens geschlossen. Ein weiterer Aspekt der Qualitätsüberwachung eines gepressten Erntegutballens gemäß der EP 3 811 768 A1 ist die bildbasierte Bewertung von fertiggestellten Knoten, mit denen Bindegarnstränge, die um den Erntegutballen gelegt werden, miteinander verbunden werden. Das System nimmt Bilder von den fertiggestellten Knoten auf und bewertet diese hinsichtlich einer Fehlbildung. Stellt das System fest, dass ein Fehler aufgetreten ist, kann das System einen Hinweis auf einen solchen Fehler an eine Anzeige übermitteln, um den Bediener der Ballenpresse zu warnen.

Ausgehend vom vorstehend genannten Stand der Technik liegt der Erfindung die Aufgabe zugrunde, ein Verfahren sowie ein System zur Qualitätsbeurteilung eines durch eine Ballenpresse gepressten Erntegutballens bereitzustellen, welches anhand von alternativen Kriterien Abweichungen in der Qualität des gepressten Erntegutballens detektiert.

Diese Aufgabe wird erfindungsgemäß durch ein Verfahren mit den Merkmalen des Anspruches 1 gelöst. Weiterhin wird die Aufgabe durch ein System mit den Merkmalen des nebengeordneten Anspruches 12 gelöst. Vorteilhafte Weiterbildungen sind Gegenstand der abhängigen Ansprüche.

Gemäß dem Anspruch 1 wird ein Verfahren zur Qualitätsüberwachung eines durch eine Ballenpresse gepressten Erntegutballens, die von einem Zugfahrzeug angetrieben wird, vorgeschlagen, wobei mittels zumindest einer Sensoreinrichtung der gepresste Erntegutballen erfasst wird. Erfindungsgemäß ist vorgesehen, dass durch die zumindest eine optische und/oder akustische Sensoreinrichtung die Form des gepressten Erntegutballens wiedergebende Daten erzeugt und einer Auswertung durch eine Steuerungseinrichtung unterzogen werden, um eine Anomalie in der Formgebung des gepressten Erntegutballens zu detektieren.

Unter dem Begriff Anomalie in der Formgebung des gepressten Erntegutballens ist eine signifikante Abweichung in der Formgebung zu verstehen, welche aus Abweichungen von der Größe, d.h. Durchmesser oder Kantenlänge, und/oder Abweichungen der für die Ballenpresse spezifischen Form des gepressten Erntegutballens resultiert.

Wesentlich ist dabei die Überlegung, dass durch das erfindungsgemäße Verfahren Betriebssituationen erkannt werden können, die auf schwierige Betriebsbedingungen der Ballenpresse zurückzuführen sind und in deren Folge die während des Ballenpressvorgangs erzeugte Formgebung der Erntegutballen nicht den gestellten Qualitätsanforderungen für Transport und Lagerung entspricht. Die Betriebsbedingungen werden dabei unter anderem durch den vorangehenden Prozess des Schwadens beeinflusst, welcher Lage und Verlauf des Schwads sowie dessen Form, d.h. Breite, Höhe und laterale Verteilung, Masse und dergleichen, wesentlich bestimmt. Ebenfalls haben Schwankungen in der Bestandsdichte und sonstige Erntekonditionen Einfluss auf den zum Erntegutballen zu verarbeitenden Schwad. Zudem beeinflussen die vom Bediener an der Ballenpresse eingestellten Betriebsparameter sowie die Führung und Lenkung des Zugfahrzeugs die erzielbare Formgebung des Erntegutballens.

Das erfindungsgemäße Verfahren ermöglicht es insbesondere weniger versierten Bedienern der Ballenpresse, die Qualität der Erntegutballen bestimmende Änderungen in der Formgebung zu erkennen.

Insbesondere kann die Steuerungseinrichtung dem Zugfahrzeug und/oder der Ballenpresse zugeordnet sein.

Bevorzugt kann zur Erfassung des Erntegutballens durch die zumindest eine Sensoreinrichtung zumindest eine Kamera und/oder zumindest ein Ultraschallsensor verwendet werden, welche bzw. welcher am Zugfahrzeug und/oder an der Ballenpresse angeordnet ist, und/oder Teil eines tragbaren Datenverarbeitungsgerätes, insbesondere eines Mobilgerätes wie Smartphone oder Tablet, ist.

So kann eine am Zugfahrzeug angeordnete Sensoreinrichtung dazu eingerichtet sein, den zuletzt auf dem Feldboden abgelegten Erntegutballen zu erfassen. Bevorzugt kann die zumindest eine Kamera als optische Sensoreinrichtung im rückwärtigen Bereich des Zugfahrzeugs, vorzugsweise im hinteren Randbereich am Kabinendach, angeordnet sein. Insbesondere kann eine positionsveränderliche Anordnung der zumindest einen als optische Sensoreinrichtung ausgeführten Kamera am Kabinendach vorgesehen sein. Hierdurch wird ein Höhen- und/oder Neigungsanpassung des Erfassungsbereiches der zumindest einen Kamera ermöglicht.

Eine Anordnung der zumindest einen optische Sensoreinrichtung an der Ballenpresse erfolgt bevorzugt im Bereich hinter der Presskammer, um den fertig gepressten Erntegutballen visuell erfassen zu können. Dabei können mehrere als Kamera ausgeführte optische Sensoreinrichtungen vorgesehen sein, um den Erntegutballen aus verschiedenen Blickrichtungen respektive Perspektiven erfassen zu können. Insbesondere kann die Erfassung der Form des gebildeten Erntegutballens automatisch erfolgen, sobald der Erntegutballen die Presskammer verlässt.

Bei einer Ausführung der Ballenpresse mit einer integrierten Wickelvorrichtung kann die Anordnung der zumindest einen optischen und/oder akustischen Sensoreinrichtung zusätzlich oder alternativ im Bereich der Wickelvorrichtung angeordnet sein, sodass ein fertig umwickelter Erntegutballen erfasst werden kann. Die Anordnung der zumindest einen Sensoreinrichtung im Bereich der Wickelvorrichtung ist bei einer Verwendung einer akustischen Sensoreinrichtung wie dem Ultraschallsensor vorteilhaft, da der Ballen auf einem Wickeltisch der Wickelvorrichtung rotieren kann bzw. ein eine Netz-, Film- bzw. Folienrolle tragender Arm der Wickelvorrichtung drehbeweglich angeordnet ist. Hierdurch lässt sich die Form mittels der zumindest einen akustischen Sensoreinrichtung über den gesamten Umfang des gebildeten Erntegutballens erfassen.

Ist die zumindest eine optische Sensoreinrichtung Teil eines mobilen Datenverarbeitungsgerätes, insbesondere eines Mobilgerätes, ermöglicht dies die Erfassung von Erntegutballen unabhängig davon, ob die Ballenpresse mit einer solchen optischen und/oder akustischen Sensoreinrichtung ausgestattet ist.

Insbesondere kann zur Auswertung ein in der Steuerungseinrichtung hinterlegter, auf künstlicher Intelligenz basierender, trainierbarer respektive lernfähiger Auswertungsalgorithmus verwendet werden. Der lernfähige Auswertungsalgorithmus kann beispielsweise auf einem trainierten künstlichen neuronalen Netz, vorzugsweise ein Artificial Neural Network, ein sogenanntes ANN, oder ein Convolutional Neural Network, ein sogenanntes CNN, basieren. Auch andere trainierbare Kl-Architekturen sind gleichermaßen als Basis für den Auswertungsalgorithmus zur Auswertung der Daten vorstellbar.

Bevorzugt kann zur Detektion von Anomalien die detektierte Formgebung des jeweiligen Erntegutballens mit zumindest einer in der Steuerungseinrichtung hinterlegten Soll-Formgebung von Erntegutballen abgeglichen werden. Die zumindest eine hinterlegte Soll-Formgebung von Erntegutballen bestimmt sich dabei unter anderem nach der Art und Ausführung der Ballenpresse. Des Weiteren kann die Soll-Formgebung durch die Art des zu pressenden Erntegutes bestimmt werden.

Insbesondere kann die Soll-Formgebung durch in der Steuerungseinrichtung hinterlegte Referenz-Daten von Erntegutballen, der Steuerungseinrichtung vorgebbare und/oder in der Steuerungseinrichtung hinterlegte oder hinterlegbare Abmessungen und/oder durch zumindest einen in der Steuerungseinrichtung hinterlegten oder hinterlegbaren Definitionsalgorithmus bestimmt werden. Die Soll-Formgebung von Erntegutballen kann beispielsweise durch die Vorgabe von konkreten Abmessungen definiert werden. Konkrete Abmessungen können vom Bediener der Ballenpresse ausgewählt und/oder eingestellt werden. Alternativ oder zusätzlich können Daten in der Steuerungseinrichtung hinterlegt oder hinterlegbar sein, welche die Soll-Formgebung von Erntegutballen wiedergeben. Insbesondere können Bilddaten als Referenz-Daten hinterlegt sein, welche die Soll-Formgebung von Erntegutballen aus verschiedenen Perspektiven wiedergeben. Alternativ oder zusätzlich kann durch den zumindest einen in der Steuerungseinrichtung hinterlegten oder hinterlegbaren Definitionsalgorithmus die Soll-Formgebung bestimmt werden, wobei der Definitionsalgorithmus eine flexiblere Anpassung an sich ändernde Erntebedingungen während der Bearbeitung eines Feldes ermöglicht.

Gemäß einer Weiterbildung kann in Abhängigkeit von der Detektion einer Anomalie in der Formgebung zumindest ein Einstellparameter des Zugfahrzeugs und/oder der Ballenpresse durch die Steuerungseinrichtung zur Korrektur der Formgebung angepasst werden. Auf diese Weise kann für nachfolgend zu pressende Erntegutballen die angestrebte Qualität sichergestellt werden.

Insbesondere kann durch die Steuerungseinrichtung als zumindest ein Einstellparameter Fahrgeschwindigkeit, Position des Zugfahrzeuges und der Ballenpresse relativ zum aufzunehmenden Schwad, Pressdichten, Paketgrößen, d.h. eine der Presskammer zugeführte Portionsgröße des Erntegutes, welche wiederum Rückschlüsse auf die erreichte Erntegutdichte zulässt, Bindemittelquantität, Anpassung der Nadelstellung und/oder Garnspannung an einer Knotereinrichtung angepasst werden. Die vorstehend nicht abschließend aufgeführten Einstellparameter sind dabei teilweise von der Art und Ausführung der Ballenpresse abhängig.

Weiter bevorzugt kann die Anpassung des zumindest einen Einstellparameters automatisch durch die Steuerungseinrichtung und/oder durch eine automatische Ansteuerung von einer oder mehreren Steuereinheiten des Zugfahrzeuges und/oder der Ballenpresse durch die Steuerungseinrichtung durchgeführt werden. Eine bevorzugt automatische Anpassung des zumindest einen Einstellparameters hat den Vorteil, dass der Bediener von der Entscheidung entlastet wird, den zumindest einen Einstellparameter auszuwählen und anzupassen, der zu einer Verbesserung bzw. Optimierung des Ballenpressvorganges führen kann. Diese Vorgehensweise ist insbesondere für weniger versierte Bediener vorteilhaft.

Gemäß einer bevorzugten Weiterbildung kann bei einer Detektion einer Anomalie in der Formgebung ein Hinweis durch die Steuerungseinrichtung generiert und auf einer Anzeigeeinheit ausgegeben werden. Hierdurch soll der Bediener auf eine Abweichung der Formgebung aufmerksam gemacht werden.

Insbesondere kann bei einer Detektion einer Anomalie in der Formgebung durch die Steuerungseinrichtung wenigstens ein Vorschlag zur manuellen Anpassung zumindest eines Einstellparameters generiert und auf der Anzeigeeinheit ausgegeben werden. Hierdurch kann der Bediener selbsttätig auf die Detektion einer Anomalie in der Formgebung reagieren. Zudem erhält er einen oder mehrere Hinweise auf zumindest einen anzupassenden Einstellparameter, der für eine Verbesserung des Ballenpressvorgangs sinnvoll ist.

Gemäß einer Weiterbildung kann das Verfahren durch eine App ausgeführt werden, die auf einem eine Kamera als optische Sensoreinrichtung, eine Speichereinheit und eine Recheneinheit aufweisenden mobilen Datenverarbeitungsgerät hinterlegt ist. Mittels des mobilen Datenverarbeitungsgerätes können sowohl der Erntegutballen und/oder der von der Ballenpresse aufzunehmende Schwad durch die Kamera des mobilen Datenverarbeitungsgerätes erfasst und/oder analysiert werden. Die App kann auf Basis der durchgeführten Analyse der aufgenommen Bilddaten, die durch die Steuerungseinrichtung und/oder das mobilen Datenverarbeitungsgerät durchgeführt werden kann, dem Bediener Vorschläge für zumindest einen Einstellparameter des Zugfahrzeugs und/oder der Ballenpresse unterbreiten.

Alternativ können die mittels des mobilen Datenverarbeitungsgerätes erfassten Daten an ein Farmmanagementsystem zur Analyse und/oder zur Dokumentation übermittelt werden.

Die eingangs gestellte Aufgabe wird weiterhin durch ein System zur Qualitätsüberwachung mit den Merkmalen des nebengeordneten Anspruches 12 gelöst.

Gemäß dem Anspruch 12 wird ein System zur Qualitätsüberwachung eines durch eine Ballenpresse gepressten Erntegutballens vorgeschlagen, wobei die Ballenpresse von einem Zugfahrzeug angetrieben ist, wobei das System zumindest eine Sensoreinrichtung zur Erfassung des gepressten Erntegutballens aufweist. Erfindungsgemäß ist vorgesehen, dass das System eine Steuerungseinrichtung umfasst, die dazu eingerichtet ist, eine Auswertung von durch die zumindest eine optische und/oder zumindest eine akustische Sensoreinrichtung erzeugten, die Formgebung des gepressten Erntegutballens wiedergebenden Daten durchzuführen, um eine Anomalie in der Formgebung des gepressten Erntegutballens zu detektieren. Auf die erfindungsgemäßen Ausführungen zum Verfahren darf verwiesen werden.

Insbesondere kann die Steuerungseinrichtung dem Zugfahrzeug und/oder der Ballenpresse zugeordnet sein.

Bevorzugt kann die Steuerungseinrichtung eine Speichereinheit, eine Recheneinheit sowie eine Anzeigeeinheit umfassen, wobei die zumindest eine optische und/oder zumindest eine akustische Sensoreinrichtung zumindest eine Kamera und/oder zumindest einen Ultraschallsensor umfassen kann, die am Zugfahrzeug und/oder an der Ballenpresse angeordnet ist bzw. sind und/oder dass die zumindest eine Kamera eine Komponente eines tragbaren Datenverarbeitungsgerätes, insbesondere eines Mobilgerätes, ist.

Gemäß einer bevorzugten Weiterbildung kann die Recheneinheit dazu eingerichtet sein, die durch die zumindest eine Sensoreinrichtung erfassen Daten, insbesondere Bilddaten, unter Nutzung einer künstlichen Intelligenz zu analysieren, wobei die künstliche Intelligenz ein trainiertes neuronales Netzwerk ist.

Insbesondere kann die Sensoreinrichtung wenigstens eine zusätzliche am Zugfahrzeug angeordnete Kamera aufweisen, welche derart an dem Zugfahrzeug positioniert ist, dass die Kamera den von der Ballenpresse aufzunehmenden Schwad erfasst und Bilddaten des Schwads an die Steuerungseinrichtung zur Auswertung überträgt. Die Auswertung der Bilddaten des Schwads kann bevorzugt ebenfalls durch den Auswertungsalgorithmus erfolgen.

Durch die wenigstens eine zusätzliche am Zugfahrzeug angeordnete Kamera kann im Wesentlichen der aufzunehmende Schwad, der von der Ballenpresse zum Erntegutballen verarbeitet wird, im Vorfeld erfasst werden. Die Ergebnisse der Analyse der Bilddaten des Schwads können bei der Bestimmung des zumindest eines Einstellparameters des Zugfahrzeugs und/oder der Ballenpresse ergänzend herangezogen werden, welcher durch die Steuerungseinrichtung zur Korrektur der Formgebung aufgrund einer detektierten Anomalie angepasst wird.

Hierzu kann die Anordnung an dem Zugfahrzeug derart vorgesehen sein, dass der Erfassungsbereich der wenigstens einen Kamera in Fahrtrichtung weist. Alternativ oder zusätzlich kann der Erfassungsbereich der wenigstens einen Kamera einen Bereich zwischen dem Zugfahrzeug und vor einer Pick-up der Ballenpresse erfassen, sodass der Schwad vor der Aufnahme durch die Pick-up detektiert wird.

Die vorliegende Erfindung wird nachstehend anhand eines in den Zeichnungen dargestellten Ausführungsbeispieles näher erläutert.

Es zeigen:
- Fig. 1: schematisch und exemplarisch eine Ansicht einer als Rundballenpresse ausgeführten Ballenpresse;
- Fig. 2: schematisch und exemplarisch eine Ansicht einer als Quaderballenpresse ausgeführten Ballenpresse;
- Fig. 3: schematisch und exemplarisch eine perspektivische Ansicht der Rundballenpresse gemäß Fig. 1 in Öffnungsstellung ihrer Auswurfklappe;
- Fig. 4: schematisch und exemplarisch eine rückwärtige Ansicht einer als Ausführungsform eines als Rundballenpresse ausgeführten Ballenpresse mit einer Wickelvorrichtung;
- Fig. 5: schematisch und exemplarisch eine Seitenansicht der in Fig. 4 dargestellten Ballenpresse; und
- Fig. 6: schematisch und exemplarisch ein mobiles Datenverarbeitungsgerät mit einer Kamera zur optischen Erfassung eines Erntegutballens.

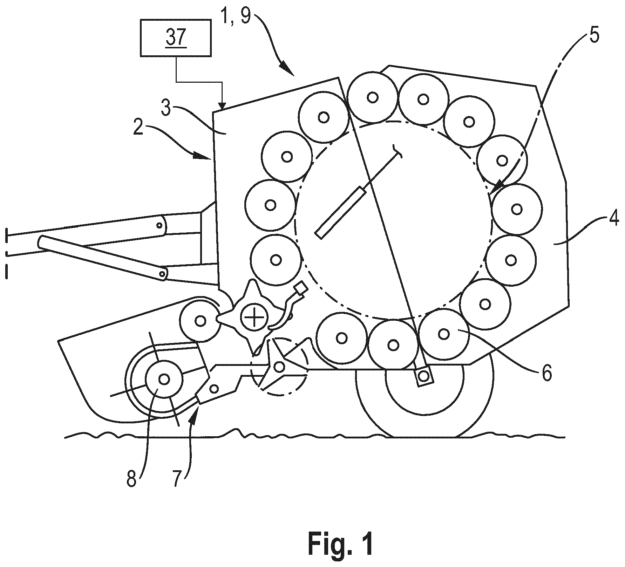

Die in Fig. 1 dargestellte, als Rundballenpresse 9 ausgeführte Ballenpresse 1 umfasst ein Pressengehäuse 2, das wiederum ein feststehendes Gehäuseteil 3 und eine relativ zu dem feststehenden Gehäuseteil 3 schwenkbare Auswurfklappe 4 umfasst. Die Auswurfklappe 4 ist zwischen einer Schließstellung und einer Öffnungsstellung relativ zum feststehenden Gehäuseteil 3 schwenkbar, wobei eine Bewegung der Auswurfklappe 3 zwischen der Schließstellung und der Öffnungsstellung zum Öffnen oder Schließen einer in dem Pressengehäuse 2 ausgebildeten Presskammer 5 führt. Das Pressengehäuse 2, insbesondere das feststehende Gehäuseteil 3, ist auf einem Fahrgestell angeordnet und mit diesem verbunden, über das die Rundballenpresse 9 wiederum mit einer in Fig. 1. nicht dargestellten landwirtschaftlichen Zugfahrzeug 11, insbesondere einem Traktor, gekoppelt werden kann, so dass die landwirtschaftliche Arbeitsmaschine die Rundballenpresse 9 im Betrieb auf einer landwirtschaftlichen Fläche bewegt und antreibt.

Die in dem Pressengehäuse 2 ausgebildete Presskammer 5 wird von einem Pressmittel 6 umfangsseitig begrenzt. Das Pressmittel 6 kann als Pressriemen ausgebildet sein oder aber von einer Vielzahl von voneinander beabstandet angeordneten Pressrollen gebildet werden, wie in Fig. 1 beispielhaft dargestellt. Während des Betriebs der Rundballenpressen 9 wird mithilfe einer Aufnahmevorrichtung 7 zum Aufnehmen und Fördern von Erntegut EG von der landwirtschaftlichen Fläche aufgenommen und in die Presskammer 5 gefördert, wobei mittels des Pressmittels 6 aus dem in die Presskammer 5 geförderten Erntegut EG ein Erntegutballen 13 in Gestalt eines Rundballens geformt bzw. gebildet wird.

Die Aufnahmevorrichtung 7 zum Aufnehmen und Fördern von Erntegut EG umfasst zumindest eine sogenannte Pick-up 8, mit deren Hilfe das Erntegut EG von der landwirtschaftlichen Fläche aufgenommen wird, und einen Rotor, mit dessen Hilfe das aufgenommene Erntegut EG der Presskammer 5 zugeführt wird.

Die Rundballenpresse 9 umfasst eine Einrichtung zum Ummanteln des in der Presskammer 5 gebildeten Rundballens mit einer Hülle. Die Einrichtung zum Ummanteln ist innerhalb des Pressengehäuses 2 angeordnet und dazu eingerichtet, den Erntegutballen 13 respektive Rundballen in der Presskammer 5 entweder mit einem Netz oder mit einem Film bzw. einer Folie als Hülle zu ummanteln.

Die Rundballenpresse 9 kann zur Ansteuerung ihrer Arbeitsaggregate eine Steuereinheit 38 aufweisen.

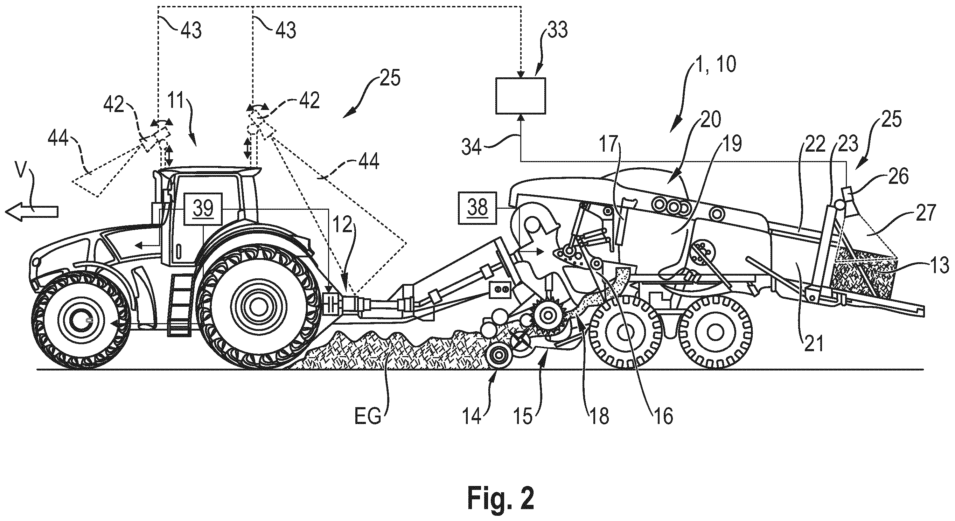

Fig. 2 zeigt in einer schematischen Seitenansicht eine Kombination aus einer landwirtschaftlichen Ballenpresse 1 in Form einer Quaderballenpresse 10 und einem Zugfahrzeug 11, wobei die Ballenpresse 10 von dem Zugfahrzeug 11 über ein Feld gezogen wird. Das Zugfahrzeug 11 weist heckseitig einen an sich bekannten Zapfwellenabtrieb 12 auf, über den die Quaderballenpresse 10 mit mechanischer Antriebsenergie versorgt werden kann. Das Zugfahrzeug 11 weist zur Ansteuerung von Arbeitsaggregaten wie Antriebsmotor, Lenksystem, Zapfwellenabtrieb und dergleichen mehr, eine Steuereinheit 39 auf.

Zur Verarbeitung von Erntegut EG zu Erntegutballen 13 in Form von Quaderballen weist die Ballenpresse 10 Förder- und/oder Verarbeitungsaggregate wie eine Pick-up 14, einen Schneidrotor 15, einen Raffer 16, und einen Presskolben 17 auf, durch welche das Erntegut EG gefördert und/oder bearbeitet wird. Dabei dient die Pick-up 14 dazu, auf dem Feldboden - zumeist in Form eines sogenannten Schwads - liegendes Erntegut EG aufzunehmen und dieses den nachgelagerten Förder- und/oder Verarbeitungsaggregaten zuzuführen.

Das so aufgenommene Erntegut EG erreicht nach Verlassen der Pick-up 14 den Schneidrotor 15, welcher eine weitere Zerkleinerung des Ernteguts EG bewirkt. Anschließend gelangt das Erntegut 13 in einen Zuführkanal 18, in welchem der Raffer 16 durch periodische Füll- und Sammelhubbewegungen eine Vorverdichtung des Erntegutes EG und eine Förderung des Ernteguts EG in eine Presskammer 19 durchführt. In der Presskammer 19 ist der Presskolben 17 translatorisch beweglich gelagert, welcher über einen Presskolbenantrieb in oszillierende Bewegungen versetzt wird. Fertig gepresste Erntegutballen 13 werden heckseitig aus der Ballenpresse 1 auf das Feld abgeworfen. Oberhalb der Presskammer 19 ist eine Knotereinrichtung 20 angeordnet.

Die Förder- und/oder Verarbeitungsaggregate der Ballenpresse 1, insbesondere die Pick-up 14, der Schneidrotor 15, der Raffer 16, der Presskolben 17 und die Knotereinrichtung 20 werden über einen zentralen Antriebsstrang der Quaderballenpresse 10 angetrieben. Die Presskammer 19 weist seitlich zwei gegenüberliegend angeordnete Seitenwände 21, sowie eine die Presskammer 19 oberseitig begrenzende Druckplatte 22. Die Seitenwände 21 und die Druckplatte 22 sind an einem Rahmen 23 außenseitig abgestützt und können in Richtung der Presskammer 19, beispielsweise hydraulisch, verschwenkt oder verlagert werden, um die Presskräfte der Seitenwände 21 und/oder der Druckplatte 22 zu verändern, damit während des wiederholten Pressens des Presskolbens 17 der Erntegutballen 13 geformt werden kann.

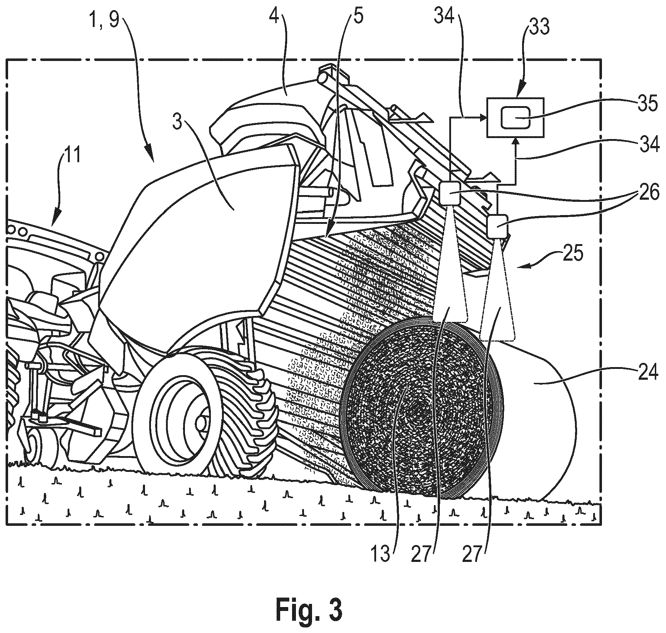

In Fig. 3 ist eine perspektivische Ansicht der Rundballenpresse 9 gemäß Fig. 1 in Öffnungsstellung der Auswurfklappe 4 dargestellt. Der aus der Presskammer 5 ausgeworfene Erntegutballen 13, hier der Rundballen, kann von einer Folie 24 ummantelt sein.

An der Rundballenpresse 9 ist zumindest eine optische und/oder zumindest eine akustische Sensoreinrichtung 25 angeordnet. Die zumindest eine optische Sensoreinrichtung 25 umfasst wenigstens eine Kamera 26, hier und vorzugsweise zwei Kameras 26, die an der Auswurfklappe 4 angeordnet sind. Jede Kamera 26 weist einen Erfassungsbereich 27 auf. Die Anordnung der beiden Kameras 26 an der Auswurfklappe 4 ist derart, dass der Erfassungsbereich 27 auf den aus der Rundballenpresse 9 ausgeworfenen Erntegutballen 13 gerichtet ist, um diesen zumindest abschnittsweise in Längs- und Quer- bzw. Umfangsrichtung visuell zu erfassen.

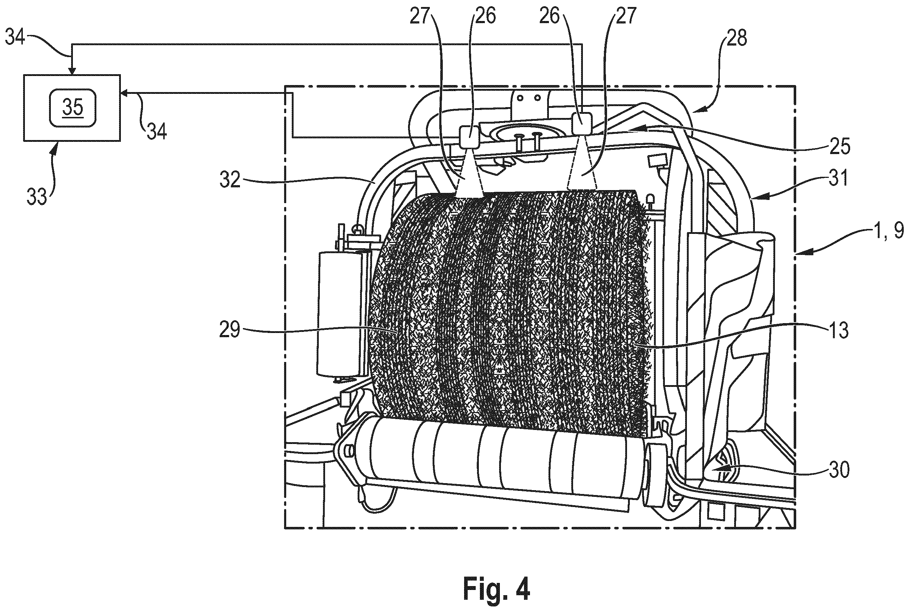

In Fig. 4 ist eine rückwärtige Ansicht einer Ausführungsform einer als Rundballenpresse 9 ausgeführten Ballenpresse 1 dargestellt, welche eine Wickelvorrichtung 28 aufweist, die hinter der Auswurfklappe 4 angeordnet ist. Die Wickelvorrichtung 28 ist ausgebildet bzw. ausgestaltet und dazu eingerichtet, den in der Presskammer 5 gebildeten Rundballen nach Verlassen der Presskammer 5 mit einem Netz, einem Film bzw. einer Folie zu ummanteln bzw. zu umhüllen. Bei der in FIG. 4 dargestellten Ausführungsform der Rundballenpresse 9 ist der Rundballen mit einem Netz 29 ummantelt. Die als Wickelvorrichtung 28 ausgebildete Einrichtung zum Ummanteln des als Rundballen ausgeführten Erntegutballens 13 umfasst einen Wickeltisch 30, auf dem der Rundballen nach Verlassen der Presskammer 5 kontinuierlich um seine Rotationsachse, eine durch die Mittelpunkte der Stirnflächen des Rundballens verlaufende Symmetrieachse, gedreht werden kann, um diesem mit dem Netz, dem Film bzw. der Folie zu ummanteln.

Die Wickelvorrichtung 28 umfasst weiterhin eine feststehende Rahmenstruktur 31, an dem ein die Netz-, Film- bzw. Folienrolle tragender Arm 32 drehbeweglich angeordnet bzw. befestigt ist, so dass dieser bei einem Wickelvorgang des Rundballens nach Verlassen der Presskammer 5 um den sich auf dem Wickeltisch 30 um seine Rotationsachse drehenden Rundballen rotieren und diesen mit dem Netz, der Folie 24 bzw. dem Film versehen kann.

Im in Fig. 4 dargestellten Ausführungsbeispiel sind an dem die Netz-, Film- bzw. Folienrolle tragenden Arm 32 zwei Kameras 26 der zumindest einen optische Sensoreinrichtung 25 angeordnet. Die Anordnung der beiden Kameras 26 an dem Arm 32 ist auch hier derart, dass der Erfassungsbereich 27 auf den auf dem Wickeltisch 30 der Rundballenpresse 9 liegenden Erntegutballen 13 gerichtet ist, um diesen zumindest abschnittsweise in Längs- und Quer- bzw. Umfangsrichtung optisch zu erfassen. Alternativ kann an dem die Netz-, Film- bzw. Folienrolle tragenden Arm 32 zumindest eine Sensoreinrichtung 25 angeordnet sein, die zumindest einen Ultraschallsensor umfasst.

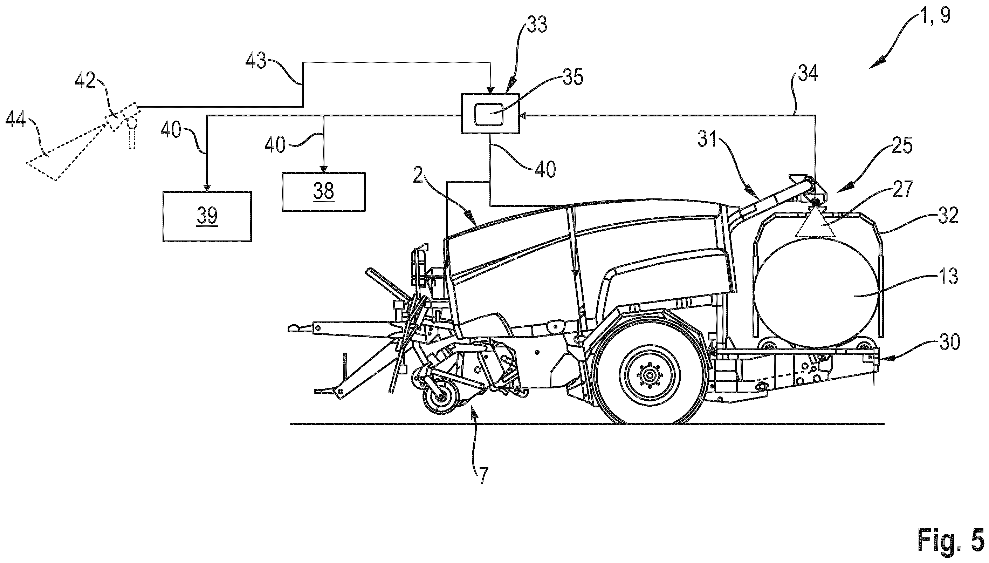

Die Darstellung in Fig. 5 zeigt schematisch und exemplarisch eine Seitenansicht der in Fig. 4 dargestellten Ballenpresse 1. Dem - in Fig. 5 nicht dargestellten - Zugfahrzeug 11 und/oder der Ballenpresse 1 ist hier und vorzugsweise eine Steuerungseinrichtung 33 zugeordnet.

Die Steuerungseinrichtung 33 ist dazu eingerichtet ist, durch die zumindest eine, insbesondere optische, Sensoreinrichtung 25 die äußere Form des gepressten Erntegutballens 13 wiedergebende Daten 34, insbesondere Bilddaten, zu empfangen. Durch einen in der Steuerungseinrichtung 33 hinterlegten Auswertungsalgorithmus 35, insbesondere Bildauswertungsalgorithmus, werden die durch die zumindest eine optische und/oder akustische Sensoreinrichtung 25 erzeugten, die Formgebung des gepressten Erntegutballens 13 wiedergebenden Daten 34 ausgewertet.

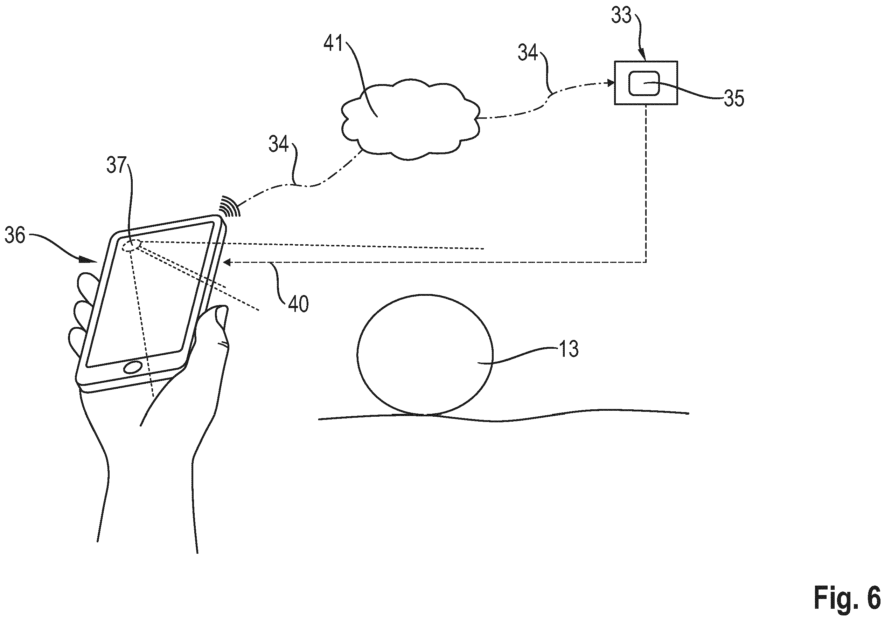

Die zur Erfassung des Erntegutballens 13 verwendete zumindest eine optische und/oder akustische Sensoreinrichtung 25 umfasst zumindest eine Kamera 26, welche am Zugfahrzeug 11 und/oder an der Ballenpresse 9 angeordnet sein kann, und/oder als eine Komponente eines tragbaren Datenverarbeitungsgerätes 36 ausgeführt sein kann, insbesondere eines Mobilgerätes, wie beispielhaft in Fig. 6 dargestellt.

In Fig. 6 ist schematisch und exemplarisch ein als Smartphone ausgeführte mobile Datenverarbeitungsgerät 36 mit einer optischen, als Kamera 37 ausgeführten Sensoreinrichtung 25 zur visuellen Erfassung des Erntegutballens 13 dargestellt. Die von der Kamera 37 erzeugten Bilddaten können mittels eines Netzwerkes 41 an die Steuerungseinrichtung 33 zur Bilddatenanalyse durch den Auswertungsalgorithmus 35 übertragen werden. Die Übertragung erfolgt bevorzugt mittels drahtloser Kommunikationstechnik.

Der zur Auswertung in der Steuerungseinrichtung 33 hinterlegte Auswertungsalgorithmus 35 basiert auf künstlicher Intelligenz und ist trainierbar.

Durch die Auswertung der Daten 34 soll eine Anomalie in der Formgebung des gepressten Erntegutballens 13 detektiert werden. Das Detektieren von Anomalien respektive Abweichungen in der Formgebung ermöglicht es, Betriebssituationen zu erkennen, die auf schwierige Betriebsbedingungen der Ballenpresse 1 zurückzuführen sind und in deren Folge die Formgebung der Erntegutballen 13 nicht den gestellten Qualitätsanforderungen, insbesondere für Transport und Lagerung, entspricht.

Die Betriebsbedingungen werden dabei unter anderem durch den vorangehenden Prozess des Schwadens beeinflusst, welcher Lage und Verlauf des Schwads sowie dessen Form, d.h. Breite, Höhe und laterale Verteilung, Masse und dergleichen wesentlich bestimmt. Ebenfalls haben Schwankungen in der Bestandsdichte und sonstige Erntekonditionen Einfluss auf den durch die Ballenpresse 1 zu verarbeitenden Schwad. Zudem beeinflussen die vom Bediener an der Ballenpresse 1 eingestellten Betriebsparameter sowie die Führung und Lenkung des Zugfahrzeugs 11 die erzielbare Formgebung.

Zur Detektion von Anomalien der detektierten Formgebung wird die mittels der Daten 34 bestimmte Formgebung des zu überprüfenden Erntegutballes 13 mit einer in der Steuerungseinrichtung 33 hinterlegten oder hinterlegbaren Soll-Formgebung von Erntegutballen abgeglichen. Die Soll-Formgebung orientiert sich dabei zunächst an der Art und Ausführung der Ballenpresse 1, d.h. handelt es sich um eine Rundballenpresse 9 oder eine Quaderballenpresse 10. Weitere die Soll-Formgebung bestimmende Parameter sind die angestrebte Größe und Masse des Erntegutballens 13. Auch diese Parameter werden durch die Ausführung und Dimensionierung der Ballenpresse 1 bestimmt.

Die Soll-Formgebung kann durch in der Steuerungseinrichtung 33 hinterlegte Referenz-Daten, insbesondere Referenz-Bilddaten, von Erntegutballen, der Steuerungseinrichtung 33 vorgebbare und/oder in der Steuerungseinrichtung 33 hinterlegte Abmessungen und/oder durch zumindest einen in der Steuerungseinrichtung 33 hinterlegten Definitionsalgorithmus bestimmt wird. In der Steuerungseinrichtung hinterlegte Referenz-Daten von Erntegutballen berücksichtigen die Form und Abmessungen der von Rundballenpressen 9 und Quaderballenpressen 10 gepressten Erntegutballen 13 vor und/oder nach dem Ummanteln sowie das verwendete Hüllenmaterial ummantelter Erntegutballen 13.

In Abhängigkeit von der Detektion einer Anomalie in der Formgebung des gepressten Erntegutballens 13 wird zumindest ein Einstellparameter 40 des Zugfahrzeugs 11 und/oder der Ballenpresse 1 durch die Steuerungseinrichtung 33 zur Korrektur der Formgebung angepasst.

Dazu können durch die Steuerungseinrichtung 33 als zumindest ein Einstellparameter 40 Fahrgeschwindigkeit und/oder Position des Zugfahrzeuges 11 und der Ballenpresse 1 relativ zum aufzunehmenden Schwad angepasst werden. Hierzu steht die Steuerungseinrichtung 33 mit der Steuereinheit 39 in Verbindung, um den zumindest einen angepasste Einstellparameter 40 an das Zugfahrzeugs 11 zu übertragen. Die Steuereinheit 39 setzt den zumindest einen angepasste Einstellparameter 40 durch eine Ansteuerung des betreffenden Arbeitsaggregates der Zugmaschine 11 um.

Weiterhin kann die Steuerungseinrichtung 33 mit der Steuereinheit 39 der Ballenpresse 1 in Verbindung stehen, um den zumindest einen angepasste Einstellparameter 40 an die Ballenpresse 1 zu übertragen.

Alternativ oder zusätzlich können Einstellparameter 40 der Aufnahmevorrichtung 7 zum Aufnehmen und Fördern von Erntegut EG angepasst werden. Alternativ oder zusätzlich können Pressdichten, Paketgröße, d.h. eine der Presskammer 19 zugeführte Portionsgröße des Erntegutes EG, welche wiederum Rückschlüsse auf die Erntegutdichte zulässt, Bindemittelquantität, Anpassung der Nadelstellung und/oder Garnspannung an der Knotereinrichtung 20 angepasst werden. Die vorstehend nicht abschließend aufgeführten Einstellparameter 40 sind dabei teilweise von der Art und Ausführung der Ballenpresse 1 abhängig.

Wird eine Anomalie in der Formgebung des Erntegutballens 13 detektiert, kann ein Hinweis durch die Steuerungseinrichtung 33 generiert und auf einer Anzeigeeinheit ausgegeben werden. Die Anzeigeeinheit kann auf dem Zugfahrzeug 11 angeordnet sein. Zusätzlich oder alternativ kann die Anzeigeeinheit von dem mobilen Datenverarbeitungsgerät 36 umfasst sein, hier und vorzugsweise das Display eines Smartphones oder Tablets.

Bei einer Detektion einer Anomalie in der Formgebung durch die Steuerungseinrichtung 33 kann dabei wenigstens ein Vorschlag zur manuellen Anpassung zumindest eines Einstellparameters 40 generiert und auf der Anzeigeeinheit ausgegeben werden.

Insbesondere kann das Verfahren in Teilen oder vollumfänglich durch eine App ausgeführt werden, die auf dem eine vorzugsweise optische Sensoreinrichtung 25, hier und vorzugsweise eine Kamera 37, eine Speichereinheit und eine Recheneinheit aufweisenden mobilen Datenverarbeitungsgerät 36 hinterlegt ist. In die App kann der Auswertungsalgorithmus 35 implementiert sein.

Dabei kann ein Bediener des mobilen Datenverarbeitungsgerätes 36 einen zu überprüfenden Erntegutballen 13 mittels der Kamera 37 des mobilen Datenverarbeitungsgerätes 36 aufnehmen und die Daten 34, hier und vorzugsweise Bilddaten, über das Netzwerk 41 an die Steuerungseinrichtung 33 zur Auswertung übertragen. Die Steuerungseinrichtung 33 überträgt das Ergebnis der Auswertung sowie in Abhängigkeit vom Ergebnis den zumindest einen Einstellparameter 40 zurück an das Datenverarbeitungsgerät 36.

Eine vollumfängliche Ausführung des Verfahrens durch die App sieht vor, dass auch die Auswertung und Generierung zumindest eines Einstellparameters 40 durch das mobile Datenverarbeitungsgerät 36 durchgeführt wird.

Die Sensoreinrichtung 25 kann, wie in Fig. 2 beispielhaft dargestellt, wenigstens eine zusätzliche am Zugfahrzeug 11 angeordnete Kamera 42 aufweisen, welche derart an dem Zugfahrzeug 11 positioniert ist, dass die wenigstens eine Kamera 42 den von der Ballenpresse 1 aufzunehmenden Schwad erfasst und Bilddaten 43 des Schwads an die Steuerungseinrichtung 33 zur Auswertung überträgt.

Hierzu kann die Anordnung an dem Zugfahrzeug 11 derart vorgesehen sein, dass ein Erfassungsbereich 44 der wenigstens einen Kamera 42 in Fahrtrichtung V weist. Alternativ oder zusätzlich kann der Erfassungsbereich 44 der wenigstens einen Kamera 42 einen Bereich zwischen dem Zugfahrzeug 11 und vor der Pick-up 8, 14 der Ballenpresse 1 erfassen. Die wenigstens eine Kamera 42 zur Erfassung des aufzunehmenden Schwads kann hinsichtlich ihrer Höhe und sowie ihrer Neigung zur Vertikalen anpassbar ausgeführt sein. Dies kann manuell oder durch ansteuerbare Aktuatoren erfolgen.

### Bezugszeichenliste

| | | | |
|---|---|---|---|
| 1 | Ballenpresse | 34 | Daten |
| 2 | Pressengehäuse | 35 | Auswertungsalgorithmus |
| 3 | Gehäuseteil | 36 | Datenverarbeitungsgerät |
| 4 | Auswurfklappe | 37 | Kamera |
| 5 | Presskammer | 38 | Steuereinheit |
| 6 | Pressmittel | 39 | Steuereinheit |
| 7 | Aufnahmevorrichtung | 40 | Einstellparameter |
| 8 | Pick-up | 41 | Netzwerk |
| 9 | Rundballenpresse | 42 | Kamera |
| 10 | Quaderballenpresse | 43 | Bilddaten |
| 11 | Zugfahrzeug | 44 | Erfassungsbereich |
| 12 | Zapfwellenabtrieb | | |
| 13 | Erntegutballen | EG | Erntegut |
| 14 | Pick-Up | V | Fahrtrichtung |
| 15 | Schneidrotor | | |
| 16 | Raffer | | |
| 17 | Presskolben | | |
| 18 | Zuführkanal | | |
| 19 | Presskammer | | |
| 20 | Knotereinrichtung | | |
| 21 | Seitenwand | | |
| 22 | Druckplatte | | |
| 23 | Rahmen | | |
| 24 | Folie | | |
| 25 | Sensoreinrichtung | | |
| 26 | Kamera | | |
| 27 | Erfassungsbereich | | |
| 28 | Wickelvorrichtung | | |
| 29 | Netz | | |
| 30 | Wickeltisch | | |
| 31 | Rahmenstruktur | | |
| 32 | Arm | | |
| 33 | Steuerungseinrichtung | | |

## Patentansprüche

1. Verfahren zur Qualitätsüberwachung eines durch eine Ballenpresse (1) gepressten Erntegutballens (13), wobei die Ballenpresse (1) von einem Zugfahrzeug (11) angetrieben wird, wobei mittels zumindest einer Sensoreinrichtung (25) der gepresste Erntegutballen (13) erfasst wird, **dadurch gekennzeichnet, dass** durch die zumindest eine optische und/oder zumindest eine akustische Sensoreinrichtung (25) die Form des gepressten Erntegutballens (13) wiedergebende Daten (34) erzeugt und einer Auswertung durch eine Steuerungseinrichtung (33) unterzogen werden, um eine Anomalie in der Formgebung des gepressten Erntegutballens (13) zu detektieren.

2. Verfahren nach Anspruch 1, **dadurch gekennzeichnet, dass** zur Erfassung des Erntegutballens (13) durch die zumindest eine Sensoreinrichtung (25) zumindest eine Kamera (26) und/oder zumindest ein Ultraschallsensor verwendet wird, welche am Zugfahrzeug (11) und/oder an der Ballenpresse (1) angeordnet ist, und/oder Komponente eines tragbaren Datenverarbeitungsgerätes (36), insbesondere eines Mobilgerätes, ist.

3. Verfahren nach Anspruch 1 oder 2, **dadurch gekennzeichnet, dass** zur Auswertung der Daten (34) ein in der Steuerungseinrichtung (33) hinterlegter, auf künstlicher Intelligenz basierender, trainierbarer Auswertungsalgorithmus (35) verwendet wird.

4. Verfahren nach einem der Ansprüche 1 bis 3, **dadurch gekennzeichnet, dass** zur Detektion von Anomalien die detektierte Formgebung mit einer in der Steuerungseinrichtung (33) hinterlegten oder hinterlegbaren Soll-Formgebung von Erntegutballen abgeglichen wird.

5. Verfahren nach Anspruch 4, **dadurch gekennzeichnet, dass** die Soll-Formgebung durch in der Steuerungseinrichtung (33) hinterlegte Referenz-Daten von Erntegutballen, der Steuerungseinrichtung (33) vorgebbare und/oder in der Steuerungseinrichtung (33) hinterlegte Abmessungen und/oder durch zumindest einen in der Steuerungseinrichtung (33) hinterlegten Definitionsalgorithmus bestimmt wird.

6. Verfahren nach einem der vorangehenden Ansprüche, **dadurch gekennzeichnet, dass** in Abhängigkeit von der Detektion einer Anomalie in der Formgebung zumindest ein Einstellparameter (40) des Zugfahrzeugs (11) und/oder der Ballenpresse (1) durch die Steuerungseinrichtung (33) zur Korrektur der Formgebung angepasst wird.

7. Verfahren nach Anspruch 6, **dadurch gekennzeichnet, dass** durch die Steuerungseinrichtung (33) Fahrgeschwindigkeit, Position des Zugfahrzeuges (11) und der Ballenpresse (1) relativ zum aufzunehmenden Schwad, Pressdichten, Paketgröße, Bindemittelquantität, Garnspannung an einer Knotereinrichtung (20) als zumindest ein Einstellparameter (40) angepasst wird.

8. Verfahren nach Anspruch 6 oder 7, **dadurch gekennzeichnet, dass** die Anpassung des zumindest einen Einstellparameters (40) automatisch durch die Steuerungseinrichtung (33) und/oder durch eine automatische Ansteuerung von einer oder mehreren Steuereinheiten (38, 39) der Ballenpresse (1) und/oder des Zugfahrzeuges (11) durch die Steuerungseinrichtung (33) durchgeführt wird.

9. Verfahren nach einem der vorangehenden Ansprüche, **dadurch gekennzeichnet, dass** bei einer Detektion einer Anomalie in der Formgebung ein Hinweis durch die Steuerungseinrichtung (33) generiert und auf einer Anzeigeeinheit ausgegeben wird.

10. Verfahren nach Anspruch 9, **dadurch gekennzeichnet, dass** bei einer Detektion einer Anomalie in der Formgebung durch die Steuerungseinrichtung (33) wenigstens ein Vorschlag zur manuellen Anpassung zumindest eines der Einstellparameters (40) generiert und auf der Anzeigeeinheit ausgegeben wird.

11. Verfahren nach einem der vorangehenden Ansprüche, **dadurch gekennzeichnet, dass** das Verfahren durch eine App ausgeführt wird, die auf einem eine Kamera (37), eine Speichereinheit und eine Recheneinheit aufweisenden mobilen Datenverarbeitungsgerät (36) hinterlegt ist.

12. System zur Qualitätsüberwachung eines durch eine Ballenpresse (1) gepressten Erntegutballens (13), wobei die Ballenpresse (1) von einem Zugfahrzeug (11) angetrieben ist, wobei das System zumindest eine Sensoreinrichtung (25) zur Erfassung des gepressten Erntegutballens (13) zugeordnet ist, **dadurch gekennzeichnet, dass** das System eine Steuerungseinrichtung (33) umfasst, die dazu eingerichtet ist, eine Auswertung von durch die zumindest eine optische und/oder zumindest eine akustische Sensoreinrichtung (25) erzeugten, die Formgebung des gepressten Erntegutballens (13) wiedergebenden Daten (34) durchzuführen, um eine Anomalie in der Formgebung des gepressten Erntegutballens (13) zu detektieren.

13. System nach Anspruch 12, **dadurch gekennzeichnet, dass** die Steuerungseinrichtung (33) eine Speichereinheit, eine Recheneinheit sowie eine Anzeigeeinheit umfasst, dass die zumindest eine Sensoreinrichtung (25) zumindest eine Kamera (26) und/oder zumindest einen Ultraschallsensor umfasst, die am Zugfahrzeug (11) und/oder an der Ballenpresse (1) angeordnet ist und/oder dass die zumindest eine Kamera (26) eine Komponente eines tragbaren Datenverarbeitungsgerätes (36), insbesondere eines Mobilgerätes, ist.

14. System nach Anspruch 13, **dadurch gekennzeichnet, dass** die Recheneinheit dazu eingerichtet ist, die Daten (34) unter Nutzung einer künstlichen Intelligenz zu analysieren, wobei die künstliche Intelligenz ein trainiertes neuronales Netzwerk ist.

15. System nach einem der Ansprüche 12 bis 14, **dadurch gekennzeichnet, dass** die zumindest eine Sensoreinrichtung (25) wenigstens eine zusätzliche am Zugfahrzeug (11) angeordnete Kamera (42) aufweist, welche derart an dem Zugfahrzeug (11) positioniert ist, dass die Kamera (42) den von der Ballenpresse (1) aufzunehmenden Schwad erfasst und Bilddaten (43) des Schwads an die Steuerungseinrichtung (33) zur Auswertung überträgt.
